# FASCICULE DE BREVET EUROPEEN

(11) **EP 4 049 934 B1**
(45) Date de publication et mention de la délivrance du brevet: **20.12.2023**
(21) Numéro de dépôt: 22157746.3
(22) Date de dépôt: 21.02.2022
(51) Int. Cl.: B64D 37/34, B64D 33/08, F02C 7/224, B64D 15/04

(54) **AÉRONEF COMPORTANT UN MOTEUR ET UN SYSTÈME DE REFROIDISSEMENT À BASE DE DIHYDROGÈNE**
LUFTFAHRZEUG, DAS EINEN MOTOR UND EIN KÜHLSYSTEM AUF WASSERSTOFFBASIS UMFASST
AIRCRAFT INCLUDING AN ENGINE AND A COOLING SYSTEM USING HYDROGEN

(30) Priorité: 25.02.2021 FR 2101848
(43) Date de publication de la demande: 31.08.2022
(73) Titulaire: AIRBUS OPERATIONS, 31060 Toulouse Cedex 9 (FR)
(72) Inventeur: ZEBIAN, Maxime, 31060 TOULOUSE (FR); BOURGALET, Davy, 31060 TOULOUSE (FR)
(74) Mandataire: Cabinet Le Guen Maillet

(56) Documents cités:
- WO-A1-2014/200582
- US-A- 4 062 184
- US-A1- 2015 337 730
- US-A1- 2019 162 121
- SIMON B ET AL: "JOINT CRYOGENIC ENGINE STUDY", INTERNATIONAL JOURNAL OF HYDROGEN ENERGY, ELSEVIER, AMSTERDAM, NL, vol. 19, no. 7, 1 juin 1994 (1994-06-01), pages 617-623, XP000443262, ISSN: 0360-3199, DOI: 10.1016/0360-3199(94)90221-6

## Description

### DOMAINE TECHNIQUE

La présente invention concerne un aéronef comportant un moteur et un système de refroidissement à base de dihydrogène.

### ÉTAT DE LA TECHNIQUE ANTÉRIEURE

Un aéronef comporte classiquement un fuselage qui délimite une cabine pour des passagers et du personnel de bord. Dans la description, le terme « cabine » inclut non seulement la cabine dans laquelle sont assis les passagers, mais également le cockpit. L'aéronef comporte également des moyens de dégivrage par exemple pour dégivrer les ailes. La cabine et les moyens de dégivrage constituent des dispositifs à chauffer.

L'aéronef comporte également au moins un turboréacteur qui permet d'entraîner l'aéronef et qui est alimenté en kérosène depuis un réservoir.

L'aéronef comporte également un système de conditionnement d'air qui prélève de l'air chaud au niveau du turboréacteur, qui régule la température de l'air ainsi prélevé et qui envoie l'air ainsi régulé vers les dispositifs à chauffer dont la cabine pour en réguler la température et les moyens de dégivrage.

Le système de conditionnement comporte ainsi des échangeurs thermiques, des filtres, des canalisations, des vannes etc..., et il capte l'air chaud du turboréacteur pour le traiter et le renvoyer vers sa destination, en particulier, vers les dispositifs à chauffer.

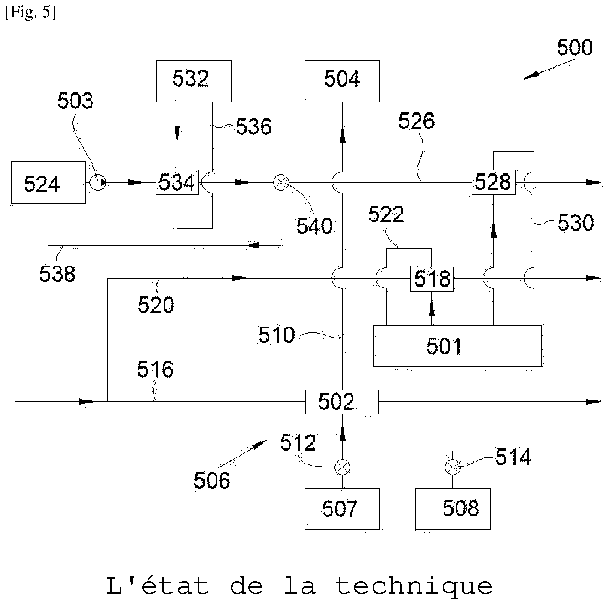

La Fig. 5 est une représentation schématique d'un tel aéronef 500 de l'état de la technique. L'aéronef 500 comporte un turboréacteur 501 qui incorpore entre autres une boîte de transmission et qui comporte également une soufflante disposée dans un canal de soufflante et destinée à générer un flux d'air dans le turboréacteur 501 selon une direction de déplacement de l'air dans le turboréacteur 501, où de manière connue, le flux d'air se déplace ensuite en aval de la soufflante dans une veine primaire ou bien dans une veine secondaire du turboréacteur 501.

Le turboréacteur 501 comporte également un compresseur moteur qui comporte un compresseur basse pression en aval de la soufflante et un compresseur haute pression en aval du compresseur basse pression, et une turbine moteur qui comporte une turbine haute pression en aval du compresseur haute pression, et une turbine basse pression en aval de la turbine haute pression.

L'air poussé par la soufflante et transitant dans la veine primaire passe successivement à travers le compresseur basse pression, le compresseur haute pression, la turbine haute pression, et la turbine basse pression, pour être éjecté vers l'extérieur. Entre le compresseur haute pression et la turbine haute pression, l'air traverse une chambre de combustion où il est mélangé au carburant afin de brûler ce dernier.

Le compresseur haute pression comporte plusieurs étages de compression où la pression augmente, de l'amont vers l'aval selon la direction de déplacement, d'une basse pression au niveau du premier étage, à une haute pression au niveau du dernier étage, en passant par des pressions intermédiaires dans les étages intermédiaires.

L'aéronef 500 comporte également des dispositifs à chauffer 504 (cabine, moyens de dégivrage) et un système de conditionnement d'air 506. Le système de conditionnement d'air 506 comporte un premier échangeur thermique 502, une première prise d'air 507 destinée à prélever, dans le compresseur haute pression, de l'air à basse pression ou à pression intermédiaire, une deuxième prise d'air 508 destinée à prélever, dans le compresseur haute pression, de l'air à haute pression.

Le système de conditionnement d'air 506 comporte également une première canalisation 510 qui traverse le premier échangeur thermique 502 et alimente les dispositifs à chauffer 504 en aval du premier échangeur thermique 502 par rapport au sens du flux d'air dans la première canalisation 510. En amont du premier échangeur thermique 502 par rapport au sens du flux d'air dans la première canalisation 510, la première canalisation 510 se divise en deux sous-canalisations, dont l'une est fluidiquement connectée à la première prise d'air 507 et dont l'autre est fluidiquement connectée à la deuxième prise d'air 508. Chaque sous-canalisation est ici équipée d'une vanne 512, 514 qui permet de réguler le passage de l'air provenant de chaque prise d'air 507, 508 en fonction des besoins de l'aéronef 500 et à cette fin, l'aéronef 500 comporte une unité de contrôle destinée à commander les vannes 512 et 514 en ouverture et en fermeture.

Le système de conditionnement d'air 506 comporte également une première canalisation d'air 516 qui alimente le premier échangeur thermique 502 avec de l'air prélevé dans le canal de soufflante.

Ainsi, l'air chaud prélevé au niveau des prises d'air 507 et 508 est refroidi au passage à travers le premier échangeur thermique 502 par l'air frais prélevé au niveau du canal de soufflante qui est alors réchauffé et rejeté vers l'extérieur ou dans un compartiment moteur, tandis que l'air refroidi est dirigé vers les dispositifs à chauffer 504 à travers la première canalisation 510.

Afin d'assurer le refroidissement du turboréacteur 501, l'aéronef 500 comporte un deuxième échangeur thermique 518 qui est destiné à effectuer un échange thermique entre un flux d'air provenant du canal de soufflante et un flux d'huile provenant du turboréacteur 501.

À cette fin, l'aéronef 500 comporte une deuxième canalisation d'air 520 qui prélève de l'air dans le canal de soufflante pour alimenter le deuxième échangeur thermique 518, et un premier circuit d'huile 522 prélevant de l'huile du turboréacteur 501 et réinjectant cette huile après passage à travers le deuxième échangeur thermique 518.

Ainsi, l'huile chaude prélevée au niveau du turboréacteur 501 est refroidie au passage à travers le deuxième échangeur thermique 518 par l'air frais prélevé au niveau du canal de soufflante qui est alors réchauffé et rejeté vers l'extérieur, tandis que l'huile refroidie est dirigée vers le turboréacteur 501.

L'aéronef 500 comporte un réservoir de carburant 524 qui permet de stocker du kérosène et une canalisation de carburant 526 qui alimente la chambre de combustion du turboréacteur 501. Une pompe 503 est agencée en sortie du réservoir de carburant 524 pour entraîner le carburant dans la canalisation de carburant 526.

Afin d'assurer un meilleur refroidissement du turboréacteur 501, l'aéronef 500 comporte un troisième échangeur thermique 528 qui est destiné à effectuer un échange thermique entre le carburant provenant du réservoir de carburant 524 et un flux d'huile provenant du turboréacteur 501.

À cette fin, la canalisation de carburant 526 prélève du carburant dans le réservoir de carburant 524 pour alimenter le troisième échangeur thermique 528, et un deuxième circuit d'huile 530 prélevant de l'huile du turboréacteur 501 et réinjectant cette huile après passage à travers le troisième échangeur thermique 528.

Ainsi, l'huile chaude prélevée au niveau du turboréacteur 501 est refroidie au passage à travers le troisième échangeur thermique 528 par le carburant prélevé dans le réservoir de carburant 524 qui est alors réchauffé et acheminé vers la chambre de combustion, tandis que l'huile refroidie est dirigée vers le turboréacteur 501.

L'aéronef 500 comporte également un générateur électrique 532 qui génère un courant électrique pour alimenter l'aéronef 500. Pour assurer le refroidissement du générateur électrique 532, l'aéronef 500 comporte un quatrième échangeur thermique 534 qui est destiné à effectuer un échange thermique entre le carburant provenant du réservoir de carburant 524 et un flux d'huile provenant du générateur électrique 532.

À cette fin, la canalisation de carburant 526 prélève du carburant dans le réservoir de carburant 524 pour alimenter le quatrième échangeur thermique 534, et un troisième circuit d'huile 536 prélevant de l'huile du générateur électrique 532 et réinjectant cette huile après passage à travers le quatrième échangeur thermique 534.

Ainsi, l'huile chaude prélevée au niveau du générateur électrique 532 est refroidie au passage à travers le quatrième échangeur thermique 534 par le carburant prélevé dans le réservoir de carburant 524 qui est alors réchauffé et acheminé vers la chambre de combustion, tandis que l'huile refroidie est dirigée vers le générateur électrique 532.

Dans le mode de réalisation présenté ici, le quatrième échangeur thermique 534 est en amont du troisième échangeur thermique 528 sur la canalisation de carburant 526 par rapport au sens du flux de carburant dans la canalisation de carburant 526, et cette dernière traverse donc successivement le quatrième échangeur thermique 534 puis le troisième échangeur thermique 528 avant de rejoindre la chambre de combustion.

L'aéronef 500 comporte également une canalisation de retour 538 fluidiquement connectée entre la canalisation de carburant 526 et le réservoir de carburant 524 au niveau d'une vanne 540 installée sur la canalisation de carburant 526 entre le quatrième échangeur thermique 534 et le troisième échangeur thermique 528 et commandée en ouverture et fermeture par l'unité de contrôle. Ainsi, le carburant peut refroidir l'huile du générateur électrique 532 et retourner dans le réservoir de carburant 524 sans que le carburant soit envoyé vers la chambre de combustion.

Bien qu'une telle installation soit performante dans le cas d'un carburant du type kérosène, il n'est pas optimisé dans le cas où le carburant est du dihydrogène qui est stocké sous forme liquide à une température très basse et consommé par le turboréacteur sous forme gazeuse.

Le document US 2015/337730 A1 décrit un système d'aéronef pour vaporiser du dihydrogène qui est stocké sous forme liquide à une température très basse.

### EXPOSÉ DE L'INVENTION

Un objet de la présente invention est de proposer un aéronef comportant un moteur et un système de refroidissement à base de dihydrogène.

À cet effet, est proposé un aéronef comportant :
- un moteur comportant un compresseur haute pression à plusieurs étages de compression et une chambre de combustion,
- un réservoir de carburant contenant du dihydrogène sous forme liquide,
- des dispositifs à chauffer,
- une première prise d'air destinée à prélever, dans le compresseur haute pression, de l'air à une basse pression ou à une pression intermédiaire, une deuxième prise d'air destinée à prélever, dans le compresseur haute pression, de l'air à une haute pression,
- un premier échangeur thermique,
- une première canalisation qui traverse le premier échangeur thermique et alimente les dispositifs à chauffer en aval du premier échangeur thermique, où en amont du premier échangeur thermique, la première canalisation se divise en deux sous-canalisations, dont l'une est fluidiquement connectée à la première prise d'air et dont l'autre est fluidiquement connectée à la deuxième prise d'air, et
- une canalisation de carburant fluidiquement connectée entre le réservoir de carburant et la chambre de combustion du moteur et traversant le premier échangeur thermique.

L'utilisation d'échangeurs thermiques sur la canalisation de dihydrogène permet d'assurer la régulation de la température des dispositifs à chauffer et du moteur, et d'augmenter la température du dihydrogène avant sa combustion.

Selon un mode de réalisation particulier, l'aéronef comporte, en aval du premier échangeur, un deuxième échangeur thermique traversé par la canalisation de carburant, et par un premier circuit d'huile prélevant de l'huile du moteur et réinjectant cette huile dans le moteur après passage à travers le deuxième échangeur thermique.

Selon un mode de réalisation particulier, l'aéronef comporte un générateur électrique, et un troisième échangeur thermique traversé par la canalisation de carburant, et par un deuxième circuit d'huile prélevant de l'huile du générateur électrique et réinjectant cette huile dans le générateur électrique après passage à travers le troisième échangeur thermique.

Selon un mode de réalisation particulier, l'aéronef comporte une nacelle entourant le moteur et à travers laquelle circule un flux d'air, et un quatrième échangeur thermique traversé par la canalisation de carburant, et par un troisième circuit dans lequel circule un fluide caloporteur et où ledit troisième circuit circule dans la nacelle.

Avantageusement, pour chaque échangeur thermique, l'aéronef comporte une canalisation de dérivation fluidiquement connectée sur la canalisation de carburant de part et d'autre dudit échangeur thermique et une vanne de régulation commandée en ouverture et fermeture et installée sur ladite canalisation de dérivation.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une représentation schématique d'un aéronef selon un premier mode de réalisation de l'invention,
[Fig. 3] est une représentation schématique d'un aéronef selon un deuxième mode de réalisation de l'invention,
[Fig. 4] est une représentation schématique d'un aéronef selon un troisième mode de réalisation de l'invention, et
[Fig. 5] est une représentation schématique d'un aéronef de l'état de la technique.

### EXPOSÉ DÉTAILLE DE MODES DE RÉALISATION

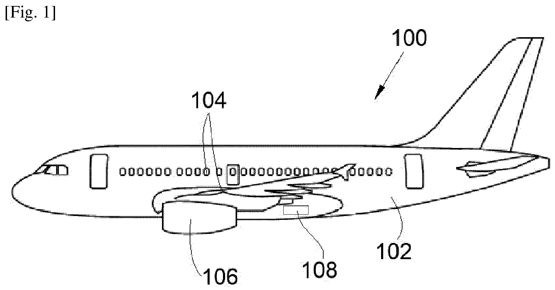

La Fig. 1 montre un aéronef 100 qui comporte un fuselage 102 à l'intérieur duquel est délimitée une cabine incluant l'espace où sont assis les passagers et le cockpit. L'aéronef 100 comporte également des moyens de dégivrage par exemple pour dégivrer les ailes. La cabine et les moyens de dégivrage constituent des dispositifs à chauffer 104. Bien sûr d'autres éléments de l'aéronef 100 peuvent être intégrés à ces dispositifs à chauffer 104.

L'aéronef 100 comporte également au moins un système de propulsion 106 comportant un moteur incorporant entre autres une boîte de transmission, et prenant la forme d'un turboréacteur ou d'un turbopropulseur fonctionnant au dihydrogène qui est stocké sous forme liquide dans un réservoir de carburant 108 disposé par exemple dans les ailes.

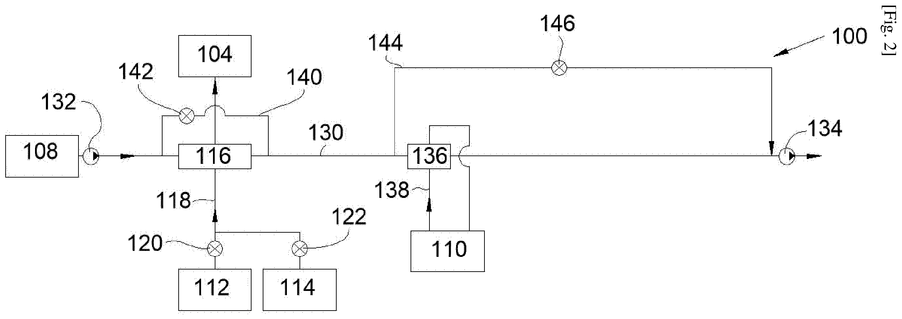

Les Figs. 2, 3 et 4 montrent un aéronef 100, 300, 400 selon différents modes de réalisation de l'invention.

L'aéronef 100, 300, 400 comporte ainsi le moteur 110 et les dispositifs à chauffer 104.

Le système de propulsion 106 comporte une soufflante disposée dans un canal de soufflante et destinée à générer un flux d'air dans le moteur 110 selon une direction de déplacement de l'air dans le moteur 110, où de manière connue, le flux d'air se déplace ensuite en aval de la soufflante dans une veine primaire ou bien dans une veine secondaire du moteur 110.

Le moteur 110 comporte également un compresseur moteur qui comporte un compresseur basse pression en aval de la soufflante et un compresseur haute pression en aval du compresseur basse pression, et une turbine moteur qui comporte une turbine haute pression en aval du compresseur haute pression, et une turbine basse pression en aval de la turbine haute pression.

L'air poussé par la soufflante et transitant dans la veine primaire passe successivement à travers le compresseur basse pression, le compresseur haute pression, la turbine haute pression, et la turbine basse pression pour être éjecté vers l'extérieur. Entre le compresseur haute pression et la turbine haute pression, l'air traverse une chambre de combustion où il est mélangé au dihydrogène afin de brûler ce dernier.

Le compresseur haute pression comporte plusieurs étages de compression où la pression augmente, de l'amont vers l'aval selon la direction de déplacement, d'une basse pression au niveau du premier étage, à une haute pression au niveau du dernier étage, en passant par des pressions intermédiaires dans les étages intermédiaires.

L'aéronef 100, 300, 400 comporte également une première prise d'air 112 destinée à prélever, dans le compresseur haute pression, de l'air à basse pression ou à pression intermédiaire, une deuxième prise d'air 114 destinée à prélever, dans le compresseur haute pression, de l'air à haute pression.

L'aéronef 100, 300, 400 comporte également un premier échangeur thermique 116 et une première canalisation 118 qui traverse le premier échangeur thermique 116 et alimente les dispositifs à chauffer 104 en aval du premier échangeur thermique 116 par rapport au sens du flux dans la première canalisation 118.

En amont du premier échangeur thermique 116 par rapport au sens du flux d'air dans la première canalisation 118, la première canalisation 118 se divise en deux sous-canalisations, dont l'une est fluidiquement connectée à la première prise d'air 112 et dont l'autre est fluidiquement connectée à la deuxième prise d'air 114. Chaque sous-canalisation est ici équipée d'une vanne 120, 122 qui permet de réguler le passage de l'air provenant de chaque prise d'air 112, 114 en fonction des besoins de l'aéronef 100, 300, 400 et à cette fin, l'aéronef 100, 300, 400 comporte une unité de contrôle destinée à commander les vannes 112, 114 en ouverture et en fermeture.

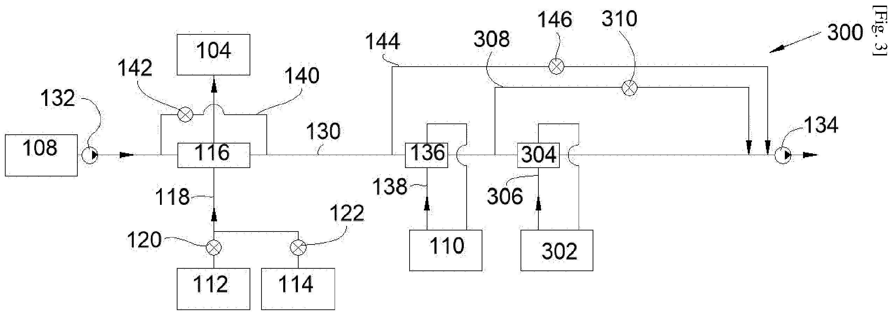

L'aéronef 100, 300, 400 comporte le réservoir de carburant 108 qui permet de stocker le dihydrogène sous forme liquide et une canalisation de carburant 130 qui est fluidiquement connectée entre le réservoir de carburant 108 et la chambre de combustion du moteur 110 pour l'alimenter en dihydrogène depuis le réservoir de carburant 108. Au moins une pompe 132, 134 est agencée sur la canalisation de carburant 130 pour entraîner le dihydrogène dans la canalisation de carburant 130. Dans le mode de réalisation de l'invention présenté ici, une pompe 132 est arrangée en sortie du réservoir de carburant 108 pour avoir une pression suffisante dans la canalisation de carburant 130 et, pour avoir une pression suffisante pour la chambre de combustion, une pompe 134 est arrangée en aval d'une deuxième canalisation de dérivation 144 par rapport au sens du flux de carburant dans la canalisation de carburant 130, où la deuxième canalisation de dérivation 144 est décrite ci-dessous. L'optimisation des débits et/ou pressions de dihydrogène dans la canalisation de carburant 130 peut conduire à modifier les positions des deux pompes 132 et 134, telles que décrites dans la Fig. 3.

Le premier échangeur thermique 116 est arrangé sur la canalisation de carburant 130 de manière à permettre un échange thermique entre le dihydrogène circulant dans la canalisation de carburant 130 et l'air circulant dans la première canalisation 118. En d'autres termes, la canalisation de carburant 130 traverse le premier échangeur thermique 116.

Ainsi, l'air chaud prélevé au niveau des prises d'air 112 et 114 est refroidi au passage à travers le premier échangeur thermique 116 par le dihydrogène prélevé au niveau du réservoir de carburant 108 qui est alors réchauffé et canalisé vers la chambre de combustion, tandis que l'air refroidi est dirigé vers les dispositifs à chauffer 104 à travers la première canalisation 118.

Ainsi, la température du dihydrogène assure une baisse de la température de l'air et l'échauffement du dihydrogène assure au moins en partie sa vaporisation avant sa combustion. Le premier échangeur thermique 116 est en outre d'un encombrement moindre que celui de l'état de la technique. En outre, le prélèvement d'air au niveau du canal de soufflante est réduit au moment du décollage ce qui améliore les performances du moteur 110.

Les variantes présentées ci-dessous assurent une meilleure vaporisation du dihydrogène en augmentant l'apport en calories.

Selon un mode de réalisation particulier, et afin d'assurer le refroidissement du moteur 110, l'aéronef 100, 300, 400 comporte un deuxième échangeur thermique 136 qui est destiné à effectuer un échange thermique entre le flux de dihydrogène provenant du premier échangeur thermique 116 et un flux d'huile provenant du moteur 110.

À cette fin, le deuxième échangeur thermique 136 est également traversé par la canalisation de carburant 130 en aval du premier échangeur thermique 116 par rapport au sens du flux de carburant dans la canalisation de carburant 130 et par un premier circuit d'huile 138 prélevant de l'huile du moteur 110 et réinjectant cette huile dans le moteur 110 après passage à travers le deuxième échangeur thermique 136.

Ainsi, l'huile chaude prélevée au niveau du moteur 110 est refroidie au passage à travers le deuxième échangeur thermique 136 par le dihydrogène circulant dans la canalisation de carburant 130 qui est alors réchauffé et canalisé vers la chambre de combustion du moteur 110 tandis que l'huile refroidie est dirigée vers le moteur 110.

Comme pour le premier échangeur thermique 116, l'échange de calories entraîne un abaissement de la température de l'huile et un réchauffement du dihydrogène avant sa combustion.

Afin de réguler le flux de dihydrogène dans le premier échangeur thermique 116, l'aéronef 100, 300, 400 comporte une première canalisation de dérivation 140 fluidiquement connectée sur la canalisation de carburant 130 de part et d'autre du premier échangeur thermique 116 et une vanne de régulation 142 commandée en ouverture et fermeture par l'unité de contrôle est installée sur la première canalisation de dérivation 140.

De la même manière, afin de réguler le flux de dihydrogène dans le deuxième échangeur thermique 136, l'aéronef 100, 300, 400 comporte une deuxième canalisation de dérivation 144 fluidiquement connectée sur la canalisation de carburant 130 de part et d'autre du deuxième échangeur thermique 136 et une vanne de régulation 146 commandée en ouverture et fermeture par l'unité de contrôle est installée sur la deuxième canalisation de dérivation 144.

Dans le mode de réalisation de la Fig. 3, l'aéronef 300 comporte un générateur électrique 302 qui génère un courant électrique pour alimenter l'aéronef 300.

Pour assurer le refroidissement du générateur électrique 302, l'aéronef 300 comporte un troisième échangeur thermique 304 qui est destiné à effectuer un échange thermique entre le dihydrogène circulant dans la canalisation de carburant 130 et un flux d'huile provenant du générateur électrique 302.

À cette fin, le troisième échangeur thermique 304 est traversé par la canalisation de carburant 130, et par un deuxième circuit d'huile 306 prélevant de l'huile du générateur électrique 302 et réinjectant cette huile dans le générateur électrique 302 après passage à travers le troisième échangeur thermique 304.

Ainsi, l'huile chaude prélevée au niveau du générateur électrique 302 est refroidie au passage à travers le troisième échangeur thermique 304 par le dihydrogène qui est alors réchauffé et acheminé vers la chambre de combustion, tandis que l'huile refroidie est dirigée vers le générateur électrique 302.

Dans le mode de réalisation de l'invention présenté ici, le troisième échangeur thermique 304 est disposé en aval du premier et du deuxième échangeurs thermiques 116 et 136 par rapport au sens du flux de carburant dans la canalisation de carburant 130, mais un ordre différent est possible.

Afin de réguler le flux de dihydrogène dans le troisième échangeur thermique 304, l'aéronef 300 comporte une troisième canalisation de dérivation 308 fluidiquement connectée sur la canalisation de carburant 130 de part et d'autre du troisième échangeur thermique 304 et une vanne de régulation 310 commandée en ouverture et fermeture par l'unité de contrôle est installée sur la troisième canalisation de dérivation 308.

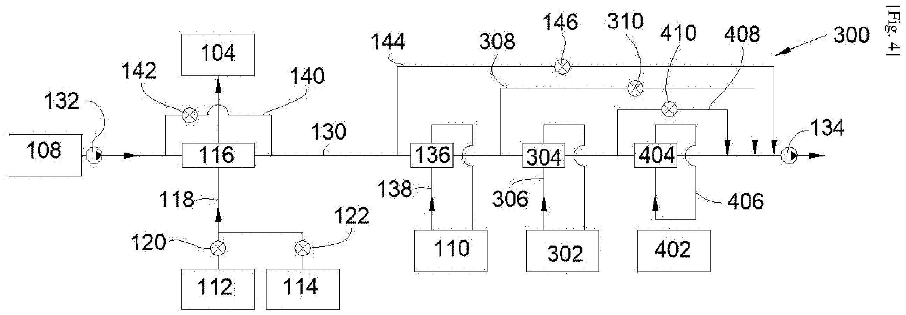

Dans le mode de réalisation de la Fig. 4, l' aéronef 400 comporte une nacelle 402 entourant le moteur 110 et à travers laquelle circule un flux d'air qui est en particulier chauffé par le moteur 110.

Pour assurer le refroidissement du flux d'air circulant dans la nacelle 402, l'aéronef 400 comporte un quatrième échangeur thermique 404 qui est destiné à effectuer un échange thermique entre le dihydrogène circulant dans la canalisation de carburant 130 et un flux d'un fluide caloporteur circulant dans un troisième circuit 406 circulant dans la nacelle 402.

À cette fin, le quatrième échangeur thermique 404 est traversé par la canalisation de carburant 130, et par le troisième circuit 406 dans lequel circule le fluide caloporteur qui se charge en calories en traversant la nacelle 402 et qui se décharge de ses calories en traversant le quatrième échangeur thermique 404.

Au niveau de la nacelle le troisième circuit 406 peut prendre par exemple la forme d'un ensemble de tuyauterie en contact avec le moteur 110 pour réaliser un échange par conduction, et/ou la forme d'un ensemble de tuyauterie en contact avec le flux d'air circulant dans la nacelle 402 pour réaliser un échange par convection.

Ainsi, lorsque le fluide caloporteur traverse la nacelle 402, il se charge en calories qu'il décharge en passant à travers le quatrième échangeur thermique 404 par le dihydrogène qui est alors réchauffé et acheminé vers la chambre de combustion, tandis que le fluide caloporteur refroidi circule en boucle.

Dans le mode de réalisation de l'invention présenté ici, le quatrième échangeur thermique 404 est disposé en aval du premier, du deuxième et du troisième échangeurs thermiques 116, 136 et 304 par rapport au sens du flux de carburant dans la canalisation de carburant 130, mais un ordre différent est possible.

Afin de réguler le flux de dihydrogène dans le quatrième échangeur thermique 404, l'aéronef 400 comporte une quatrième canalisation de dérivation 408 fluidiquement connectée sur la canalisation de carburant 130 de part et d'autre du quatrième échangeur thermique 404 et une vanne de régulation 410 commandée en ouverture et fermeture par l'unité de contrôle est installée sur la quatrième canalisation de dérivation 408.

Dans le mode de réalisation de l'invention des Figs. 3 et 4, les deuxième, troisième et quatrième canalisations de dérivation 144, 308 et 408 débouchent toutes dans la canalisation de carburant 130 en aval du quatrième échangeur thermique 404 par rapport au sens du flux de carburant dans la canalisation de carburant 130, mais il est possible que chaque canalisation de dérivation 144, 308, 408 débouche dans la canalisation de carburant 130 juste en aval de l'échangeur thermique correspondant 136, 304, 404.

Dans le mode de réalisation de l'invention présenté sur la Fig. 2, la température du moteur 110 est régulée par le deuxième échangeur thermique 136, dans le mode de réalisation de la Fig. 3, la température du moteur 110 est régulée par le deuxième échangeur thermique 136 et la température du générateur électrique 302 est régulée par le troisième échangeur thermique 304, et dans le mode de réalisation de la Fig. 4, la température du moteur 110 est régulée par le deuxième échangeur thermique 136, la température du générateur électrique 302 est régulée par le troisième échangeur thermique 304 et la température du flux d'air de la nacelle 402 est régulée par le quatrième échangeur thermique 404, mais il est possible de prévoir d'autres combinaisons. Par exemple, il est possible de réguler uniquement la température du générateur électrique 302, ou la température du flux d'air de la nacelle 402, ou la température du moteur 110 et la température du flux d'air de la nacelle 402 ou la température du flux d'air de la nacelle 402 et la température du générateur électrique 302.

Afin de permettre une régulation stable du débit de dihydrogène au cours de toutes les phases de vol, un accumulateur peut être installé sur la ligne entre le réservoir 108 et la pompe 134.

Un autre échangeur peut être ajouté le long de la canalisation de carburant 130 entre les pompes 132 et 134 dans le cas où la chaleur récupérée n'est pas encore suffisante pour monter en température le carburant avant son introduction dans la chambre de combustion. Cet échangeur activable ou désactivable selon les besoins et phases de vol prélève de l'air extérieur (dans la veine secondaire par exemple) pour réguler la température du carburant. Cet échangeur peut également être positionné sur le troisième circuit 406 et ainsi échanger indirectement avec le carburant à travers le fluide caloporteur.

## Revendications

1. Aéronef (100, 300, 400) comportant :
- un moteur (110) comportant un compresseur haute pression à plusieurs étages de compression et une chambre de combustion,
- un réservoir de carburant (108) contenant du dihydrogène sous forme liquide,
- des dispositifs à chauffer (104),
- une première prise d'air (112) destinée à prélever, dans le compresseur haute pression, de l'air à une basse pression ou à une pression intermédiaire, une deuxième prise d'air (114) destinée à prélever, dans le compresseur haute pression, de l'air à une haute pression,
- un premier échangeur thermique (116),
- une première canalisation (118) qui traverse le premier échangeur thermique (116) et alimente les dispositifs à chauffer (104) en aval du premier échangeur thermique (116), où en amont du premier échangeur thermique (116), la première canalisation (118) se divise en deux sous-canalisations, dont l'une est fluidiquement connectée à la première prise d'air (112) et dont l'autre est fluidiquement connectée à la deuxième prise d'air (114), et
- une canalisation de carburant (130) fluidiquement connectée entre le réservoir de carburant (108) et la chambre de combustion du moteur (110) et traversant le premier échangeur thermique (116).

2. Aéronef (100, 300, 400) selon la revendication 1, **caractérisé en ce qu'**il comporte, en aval du premier échangeur (116), un deuxième échangeur thermique (136) traversé par la canalisation de carburant (130), et par un premier circuit d'huile (138) prélevant de l'huile du moteur (110) et réinjectant cette huile dans le moteur (110) après passage à travers le deuxième échangeur thermique (136).

3. Aéronef (300) selon l'une des revendications 1 ou 2, **caractérisé en ce qu'**il comporte un générateur électrique (302), et un troisième échangeur thermique (304) traversé par la canalisation de carburant (130), et par un deuxième circuit d'huile (306) prélevant de l'huile du générateur électrique (302) et réinjectant cette huile dans le générateur électrique (302) après passage à travers le troisième échangeur thermique (304).

4. Aéronef (400) selon l'une des revendications 1 à 3, **caractérisé en ce qu'**il comporte une nacelle (402) entourant le moteur (110) et à travers laquelle circule un flux d'air, et un quatrième échangeur thermique (404) traversé par la canalisation de carburant (130), et par un troisième circuit (406) dans lequel circule un fluide caloporteur et où ledit troisième circuit (406) circule dans la nacelle (402).

5. Aéronef (100, 300, 400) selon l'une des revendications 1 à 4, **caractérisé en ce que**, pour chaque échangeur thermique (116, 136, 304, 404), l'aéronef (100, 300, 400) comporte une canalisation de dérivation (140, 144, 308, 408) fluidiquement connectée sur la canalisation de carburant (130) de part et d'autre dudit échangeur thermique (116, 136, 304, 404) et une vanne de régulation (142, 146, 310, 410) commandée en ouverture et fermeture et installée sur ladite canalisation de dérivation (140, 144, 308, 408).

## Patentansprüche

1. Luftfahrzeug (100, 300, 400), das aufweist:
- einen Motor (110), der einen Hochdruckkompressor mit mehreren Verdichtungsstufen und eine Brennkammer aufweist,
- einen Treibstofftank (108), der Diwasserstoff in flüssiger Form enthält,
- zu erwärmende Vorrichtungen (104),
- einen ersten Lufteinlass (112), der dazu bestimmt ist, im Hochdruckkompressor Luft auf einem niedrigen Druck oder einem mittleren Druck zu entnehmen, einen zweiten Lufteinlass (114), der dazu bestimmt ist, im Hochdruckkompressor Luft auf einem hohen Druck zu entnehmen,
- einen ersten Wärmetauscher (116),
- eine erste Leitung (118), die den ersten Wärmetauscher (116) durchquert und die dem ersten Wärmetauscher (116) nachgelagerten oder dem ersten Wärmetauscher (116) vorgelagerten zu erwärmenden Vorrichtungen (104) versorgt, wobei die erste Leitung (118) sich in zwei Teilleitungen unterteilt, von denen eine mit dem ersten Lufteinlass (112) in Fluidverbindung steht und die andere mit dem zweiten Lufteinlass (114) in Fluidverbindung steht, und
- eine Treibstoffleitung (130), die zwischen dem Treibstofftank (108) und der Brennkammer des Motors (110) in Fluidverbindung steht und den ersten Wärmetauscher (116) durchquert.

2. Luftfahrzeug (100, 300, 400) nach Anspruch 1, **dadurch gekennzeichnet, dass** es dem ersten Tauscher (116) nachgelagert einen zweiten Wärmetauscher (136) aufweist, der von der Treibstoffleitung (130) und von einem ersten Ölkreislauf (138) durchquert wird, der Öl vom Motor (110) entnimmt und dieses Öl nach dem Durchgang durch den zweiten Wärmetauscher (136) wieder in den Motor (110) einspeist.

3. Luftfahrzeug (300) nach einem der Ansprüche 1 oder 2, **dadurch gekennzeichnet, dass** es einen elektrischen Generator (302) und einen dritten Wärmetauscher (304) aufweist, der von der Treibstoffleitung (130) und von einem zweiten Ölkreislauf (306) durchquert wird, der Öl vom elektrischen Generator (302) entnimmt und dieses Öl nach dem Durchgang durch den dritten Wärmetauscher (304) wieder in den elektrischen Generator (302) einspeist.

4. Luftfahrzeug (400) nach einem der Ansprüche 1 bis 3, **dadurch gekennzeichnet, dass** es eine Gondel (402), die den Motor (110) umgibt und durch die ein Luftstrom zirkuliert, und einen vierten Wärmetauscher (404) aufweist, der von der Treibstoffleitung (130) und von einem dritten Kreislauf (406) durchquert wird, in dem ein Wärmeträgerfluid zirkuliert, und wobei der dritte Kreislauf (406) in der Gondel (402) zirkuliert.

5. Luftfahrzeug (100, 300, 400) nach einem der Ansprüche 1 bis 4, **dadurch gekennzeichnet, dass** das Luftfahrzeug (100, 300, 400) für jeden Wärmetauscher (116, 136, 304, 404) eine Bypassleitung (140, 144, 308, 408), die mit der Treibstoffleitung (130) zu beiden Seiten des Wärmetauschers (116, 136, 304, 404) in Fluidverbindung steht, und ein Regelventil (142, 146, 310, 410) aufweist, dessen Öffnen und Schließen gesteuert wird und das auf der Bypassleitung (140, 144, 308, 408) eingebaut ist.

## Claims

1. Aircraft (100, 300, 400) having:
- an engine (110) having a high-pressure compressor with multiple compression stages and a combustion chamber,
- a fuel tank (108) containing dihydrogen in liquid form,
- devices (104) to be heated,
- a first air intake (112) intended to draw, from the high-pressure compressor, air at a low pressure or at an intermediate pressure, and a second air intake (114) intended to draw, from the high-pressure compressor, air at a high pressure,
- a first heat exchanger (116),
- a first pipe (118) which passes through the first heat exchanger (116) and feeds the devices (104) to be heated downstream of the first heat exchanger (116), wherein, upstream of the first heat exchanger (116), the first pipe (118) is divided into two sub-pipes, one of which is fluidically connected to the first air intake (112) and the other of which is fluidically connected to the second air intake (114), and
- a fuel pipe (130) that is fluidically connected between the fuel tank (108) and the combustion chamber of the engine (110) and passes through the first heat exchanger (116).

2. Aircraft (100, 300, 400) according to Claim 1, **characterized in that** it has, downstream of the first exchanger (116), a second heat exchanger (136) through which pass the fuel pipe (130) and a first oil circuit (138) that draws oil from the engine (110) and reinjects this oil into the engine (110) after it has passed through the second heat exchanger (136).

3. Aircraft (300) according to either one of Claims 1 and 2, **characterized in that** it has an electric generator (302), and a third heat exchanger (304) through which pass the fuel pipe (130) and a second oil circuit (306) that draws oil from the electric generator (302) and reinjects this oil into the electric generator (302) after it has passed through the third heat exchanger (304).

4. Aircraft (400) according to one of Claims 1 to 3, **characterized in that** it has a nacelle (402) which surrounds the engine (110) and through which circulates an air flow, and a fourth heat exchanger (404) through which passes the fuel pipe (130) and a third circuit (406) in which a heat-transfer fluid circulates, and wherein said third circuit (406) circulates in the nacelle (402).

5. Aircraft (100, 300, 400) according to one of Claims 1 to 4, **characterized in that**, for each heat exchanger (116, 136, 304, 404), the aircraft (100, 300, 400) has a diversion pipe (140, 144, 308, 408) fluidically connected on the fuel pipe (130) on either side of said heat exchanger (116, 136, 304, 404) and a regulating valve (142, 146, 310, 410) that is commanded to open and close and is installed on said diversion pipe (140, 144, 308, 408).
